(19)

**Europäisches Patentamt**
**European Patent Office**
**Office européen des brevets**

(11) **EP 4 156 683 A1**

(12) **EUROPEAN PATENT APPLICATION**
published in accordance with Art. 153(4) EPC

(43) Date of publication:
**29.03.2023 Bulletin 2023/13**

(21) Application number: **21816877.1**

(22) Date of filing: **26.05.2021**

(51) International Patent Classification (IPC):
**H04N 19/124** (2014.01)

(52) Cooperative Patent Classification (CPC):
**G06N 3/04; H04N 19/124; H04N 19/147;**
**H04N 19/176; H04N 19/91; H04N 19/96**

(86) International application number:
**PCT/CN2021/095948**

(87) International publication number:
**WO 2021/244363 (09.12.2021 Gazette 2021/49)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: 05.06.2020   CN 202010508225
14.07.2020   CN 202010677169

(71) Applicant: **GUANGDONG OPPO MOBILE**
**TELECOMMUNICATIONS**
**CORP., LTD.**
**Dongguan, Guangdong 523860 (CN)**

(72) Inventors:
• **MA, Zhan**
**Dongguan, Guangdong 523860 (CN)**
• **WANG, Jianqiang**
**Dongguan, Guangdong 523860 (CN)**

(74) Representative: **Manitz Finsterwald**
**Patent- und Rechtsanwaltspartnerschaft mbB**
**Martin-Greif-Strasse 1**
**80336 München (DE)**

(54) **POINT CLOUD COMPRESSION METHOD, ENCODER, DECODER, AND STORAGE MEDIUM**

(57)    Disclosed are a point cloud compression method, an encoder, a decoder, and a storage medium. The method comprises: obtaining the current block of a video to be encoded; determining geometric information of point cloud data of the current block and corresponding attribute information; performing down-sampling on the geometric information and the corresponding attribute information by using a sparse convolutional network so as to obtain hidden layer features; and compressing the hidden layer features to obtain a compressed code stream.

A current block of a video to be compressed is acquired — S301

The geometric information and corresponding attribute information of the point cloud data of the current block are determined — S302

A hidden layer feature is obtained by downsampling the geometric information and the corresponding attribute information by using a sparse convolution network — S303

A compressed bitstream is obtained by compressing the hidden layer feature — S304

**FIG. 3A**

**Description**

CROSS-REFERENCE TO RELATED APPLICATION

The present application is based on and claims priority to Chinese Patent Application No. 202010508225.3, filed on June 5, 2020, and Chinese Patent Application No. 202010677169.6, filed on July 14, 2020. The contents of these applications are hereby incorporated by reference in their entireties.

TECHNICAL FIELD

Embodiments of the present disclosure relate to video coding techniques, and relate to, but are not limited to, point cloud compression method, encoder, decoder and storage media.

BACKGROUND

In the learning-based point cloud geometric compression technology, the application scope of the technology of compression on point set is limited to small point cloud with fixed and small number of points, and can not be used for complex point cloud in real scenes. Moreover, since the conversion of the sparse point cloud into a volume model for compression, the point cloud compression technology based on three-dimensional densely convolution does not fully exploit the sparse structure of the point cloud, resulting in computing redundancy and low coding performance.

SUMMARY

The embodiments of the disclosure provide a method for compressing point cloud, an encoder, a decoder and storage medium. The technical solutions of the embodiment of the disclosure are implemented as follows.
In a first aspect, the method for compressing the point cloud provided by an embodiment of the disclosure includes the following steps.
A current block of a video to be compressed is acquired.
The geometric information and corresponding attribute information of the point cloud data of the current block are determined.
A hidden layer feature is obtained by downsampling the geometric information and the corresponding attribute information by using a sparse convolution network.
A compressed bitstream is obtained by compressing the hidden layer feature.
In a second aspect, the method for compressing the point cloud provided by an embodiment of the disclosure includes the following steps.
A current block of a video to be decompressed is acquired.
The geometric information and corresponding attribute information of the point cloud data of the current block are determined.
A hidden layer feature is obtained by upsampling the geometric information and the corresponding attribute information by using a transposed convolution network.
A decompressed bitstream is obtained by decompressing the hidden layer feature.
In a third aspect, an encoder provided by an embodiment of the disclosure includes:
a first memory and a first processor.
The first memory is configured to store a computer program that is executable by the first processor, and the first processor is configured to, when executing the program, implement the method described in the first aspect.
In a fourth aspect, a decoder provided by an embodiment of the disclosure includes:
a second memory and a second processor.
The second memory is configured to store a computer program that is executable by the second processor, and the second processor is configured to, when executing the program, implement the method described in the second aspect.
In the embodiment of the disclosure, for the acquired current block of the video to be encoded, the geometric information and corresponding attribute information of the point cloud data of the current block are determined first. Then the hidden layer feature is obtained by downsampling the geometric information and the corresponding attribute information by using a sparse convolution network. Finally, the compressed bitstream is obtained by compressing the hidden layer feature. In this way, the sparsely downsampling is performed for the geometric information and attribute information of the point cloud in the current block by using the sparse convolution network, and thus the sparse conversion for the complex point cloud can be implemented, such that the hidden layer feature can be compressed to obtain the compressed bitstream, which can not only improve the operation speed, but also have high coding performance, and can be used for complex point cloud in real scenes.

BRIEF DESCRIPTION OF THE DRAWINGS

FIG. 1 is a block diagram of an exemplary encoding process provided by an embodiment of the present disclosure.

FIG. 2 is a block diagram of an exemplary decoding process provided by an embodiment of the present disclosure.

FIG. 3A is a schematic diagram of the process of implementing the method for compressing the point cloud according to an embodiment of the disclosure.

FIG. 3B is a structural schematic diagram of a neural network according to an embodiment of the present disclosure.

FIG. 3C is a schematic diagram of another process of implementing the method for compressing the point cloud provided by an embodiment of the disclosure.

FIG. 4 is a schematic diagram of another process of implementing the method for compressing the point cloud according to an embodiment of the disclosure.

FIG. 5A is a schematic diagram of the process of implementing the method for compressing and decompressing the point cloud according to an embodiment of the disclosure.

FIG. 5B is a structural schematic diagram of an Inception-Residual Network (IRN) according to an embodiment of the present disclosure.

FIG. 5C illustrates a structural schematic diagram of a context module according to an embodiment of the present disclosure.

FIG. 6 is a schematic diagram of a reconstruction process according to an embodiment of the disclosure.

FIG. 7 is a schematic diagram of a comparison of the code rate graphs according to the embodiment of the present disclosure with the code rate graphs of other methods on various data.

FIG. 8 is a schematic diagram of a comparison of subjective quality according to an embodiment of the present disclosure with the subjective quality obtained by other methods on red and black data with similar bit rate.

FIG. 9 is a structural schematic diagram of the composition of an encoder provided by an embodiment of the present disclosure.

FIG. 10 is a structural schematic diagram of another composition of an encoder provided by an embodiment of the present disclosure.

FIG. 11 is a structural schematic diagram of the composition of a decoder provided by an embodiment of the present disclosure.

FIG. 12 is a structural schematic diagram of another composition of a decoder provided by an embodiment of the present disclosure.

DETAILED DESCRIPTION

In order to make the object, technical solution and advantages of the embodiments of the present disclosure clearer, the specific technical solutions of the present disclosure will be described in detail below with reference to the accompanying drawings of the present disclosure. The following embodiments are used to illustrate the present disclosure, but are not intended to limit the scope of the present disclosure.

Unless otherwise defined, all technical and scientific terms used herein have the same meanings as are commonly understood by those skilled in the art of the present disclosure. Terms used herein are for the purpose of describing the embodiments of the disclosure only and are not intended to limit the present disclosure.

In the following description, reference is made to "some embodiments" that describe a subset of all possible embodiments. However, it is to be understood that "some embodiments" may be the same subset or different subsets of all possible embodiments and may be combined with each other without conflict.

It it to be pointed out that, the terms "first\ second\ third" referred in embodiments of the present disclosure are merely to distinguish similar or different objects, and do not represent a particular order for the objects. It is to be understood that "first\ second\ third" may be interchanged in a particular order or sequence where permitted, such that the embodiments of the disclosure described herein may be implemented in an order other than that illustrated or described herein.

In order to facilitate the understanding for the technical solutions provided by the embodiment of the present disclosure, a flow block diagram of Geometry-based Point Cloud Compression (G-PCC) encoding and a flow block diagram of G-PCC decoding are provided firstly. It is to be noted that the flow block diagram of G-PCC encoding and the flow block diagram of G-PCC decoding described in the embodiment of the present disclosure are only for more clearly explaining the technical solutions of the embodiment of the present disclosure, and do not constitute a limitation to the technical solutions provided in the embodiment of the present disclosure. Those skilled in the art will know that with the evolution of G-PCC encoding and decoding technology and the emergence of new service scenarios, the technical solutions provided by the embodiments of the present disclosure are equally applicable to similar technical problems.

In the embodiment of the present disclosure, in the framework of the point cloud G-PCC encoder, after performing slice division for the point cloud input to the three-dimensional image model, each slice is independently encoded.

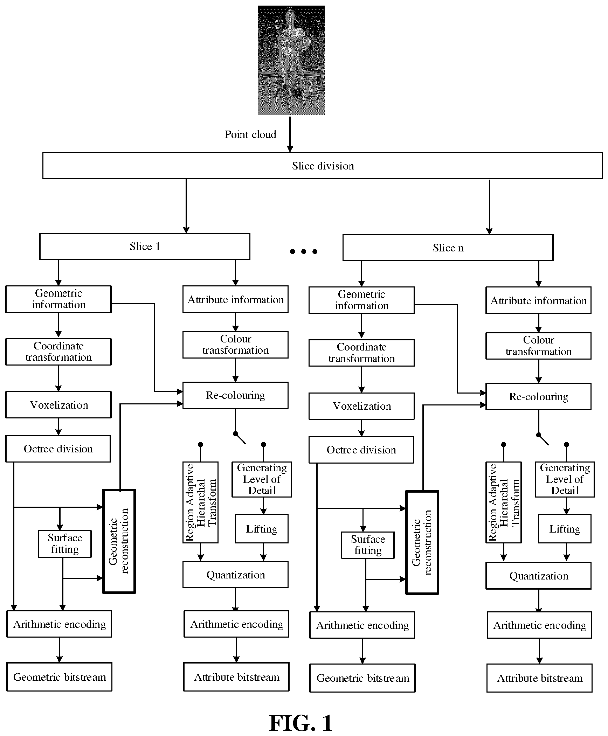

In the block diagram of the process of the G-PCC encoding as illustrated in FIG. 1, it is applied to the point cloud encoder. For the point cloud data to be encoded, the point cloud data is divided into a plurality of slices by performing slice division. In each slice, the geometric information of the point cloud and the attribute information corresponding to each point cloud are encoded separately. In the process of geometric encoding, coordinate transformation is performed on the geometric information, such that the point cloud is all included in a bounding box, and then the quantization is performed, in this step, the quantization mainly plays the role of scaling. Because the quantization is rounded, the geometric information of part of the point cloud is the same, so it is decided whether to remove repeating points based on the parameters. The process of quantization and removal of repeating points is also called voxelization process. Then the bounding box is divided into octree. In the octree-based geometric information encoding process, the bounding box is divided into eight child cubes, and the non-empty child cube (including points in the point cloud) is further divided into eight equal parts, until the division is stopped when the leaf nodes obtained after the division are $1 \times 1 \times 1$ unit cubes, and the points in the leaf nodes are arithmetically encoded to generate the binary geometric bitstream, i.e., the geometric bitstream. In the process of geometric information encoding based on triangle soup (trisoup), also, the octree division should be performed first. But unlike the octree-based geometric information encoding, the trisoup does not need to divide the point cloud layer by layer into unit cubes with side lengths of $1 \times 1 \times 1$, instead, the division is stopped when the side length of a block is W. Based on the surface formed by the distribution of point cloud in each block, up to twelve vertex generated by the surface and twelve sides of the block are obtained, and the vertex are arithmetically encoded (surface fitting based on the vertex) to generate the binary geometric bitstream, i.e., the geometric bitstream. The vertex are also used for the implementation process of geometric reconstruction, and the reconstructed geometric information is used when encoding the attribute of the point cloud.

In the process of the attribute encoding, the geometric encoding is completed, and after geometric information is reconstructed, the colour conversion is performed, the colour information (i.e., attribute information) is converted from Red Green Blue (RGB) colour space to YUV colour space. Then, the point cloud is re-coloured by using the reconstructed geometric information, so that the unencoded attribute information corresponds to the reconstructed geometric information. During the colour information encoding, there are two main transformation methods. One is the distance-based lifting transformation that relies on the division of Level of Detail (LOD). The other is to directly perform the transformation of Region Adaptive Hierarchical Transform (RAHT). Both manners may transform the colour information from spatial domain to frequency domain, the high frequency coefficient and low frequency coefficient are obtained through transformation, and finally the coefficients are quantized (i.e. quantization coefficients). Finally, after the geometric encoded data after octree division and surface fitting and the attribute encoded data processed by quantization coefficients are slice synthesized, the vertex coordinates of each block are encoded in turn (i.e. arithmetic encoding) to generate binary attribute bitstream, i.e., attribute bitstream.

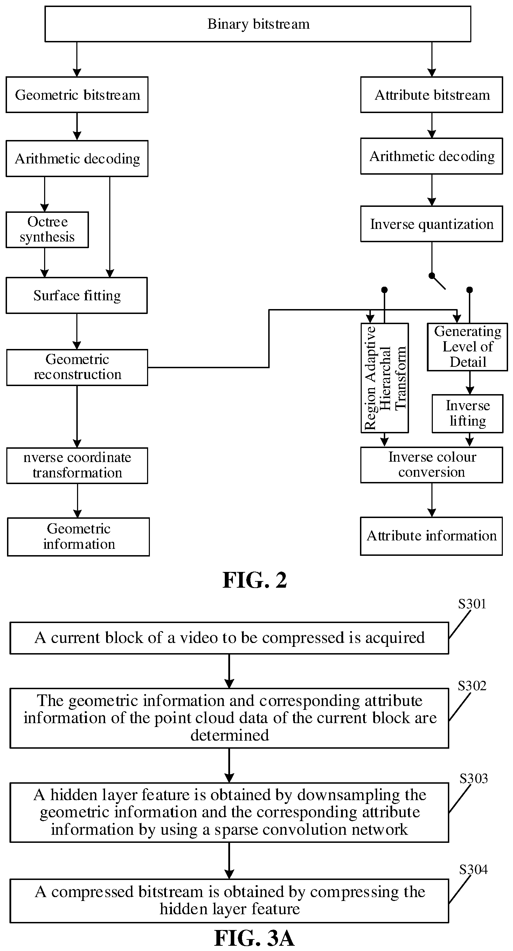

In the block diagram of the G-PCC decoding process as illustrated in FIG. 2, it is applied to the point cloud decoder. The decoder acquires the binary bitstream and decodes independently the geometric bitstream and the attribute bitstream in the binary bitstream. When decoding the geometric bitstream, the geometric information of the point cloud is obtained by arithmetic decoding-octree synthesis-surface fitting-geometric reconstruction-inverse coordinate transformation. When decoding the attribute bitstream, the attribute information of the point cloud is obtained by arithmetic decoding-inverse quantization-inverse lifting based on LOD or inverse transformation based on RAHT- inverse colour conversion, and the three-dimensional image model of the point cloud data to be encoded is restored based on the geometric information and the attribute information.

The method for compressing the point cloud in the embodiment of the present disclosure is mainly applied to the process of G-PCC encoding as illustrated in FIG. 1 and the process of G-PCC decoding as illustrated in FIG. 2. That is, the method for compressing point cloud according to the embodiment of the present disclosure can be applied to the block diagram of the process of G-PCC encoding, or the block diagram of the process of G-PCC decoding, or even both the block diagram of the process of G-PCC encoding and the block diagram of G-PCC decoding at the same time.

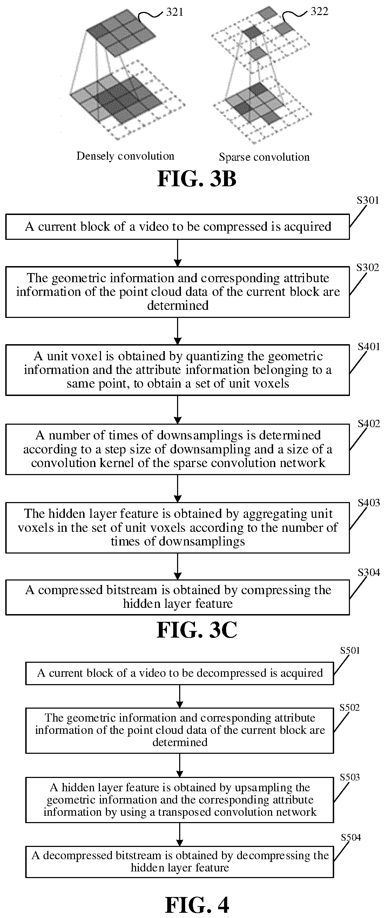

FIG. 3A is a schematic diagram of the process of implementing the method for compressing the point cloud according to an embodiment of the disclosure, and the method may be implemented by an encoder. As illustrated in FIG. 3, the method includes the following steps.

At step S301, a current block of a video to be compressed is acquired.

It is to be noted that the video picture can be divided into a plurality of picture blocks, and each picture block currently to be encoded can be referred to as a Coding Block (CB). Herein, each coding block may include a first colour component, a second colour component and a third colour component. The current block is a coding block currently to be performed the first colour component prediction, the second colour component prediction or the third colour component prediction in the video picture.

Herein, assuming that the current block performs a first colour component prediction and the first colour component is a luma component, that is, the colour component to be predicted is a luma component, the current block can also be referred to as a luma block. Alternatively, assuming that the current block performs a second colour component prediction and the second colour component is a chroma component, that is, the colour component to be predicted is a chroma component, the current block may also be referred to as a chroma block.

It is also to be noted that the prediction mode parameter indicates the encoding mode of the current block and the parameter related to the mode. Generally, the prediction mode parameter of the current block can be determined by using Rate Distortion Optimization (RDO).

In some embodiments, the implementation that the encoder determines the prediction mode parameter of the current block is as follows: the encoder determines the colour component to be predicted of the current block; based on the parameter of the current block, the colour component to be predicted is predicted and encoded by using a plurality of prediction modes, respectively, and the rate distortion cost result corresponding to each prediction mode of a plurality of prediction modes is calculated; and a minimum rate distortion cost result is selected from a plurality of calculated rate distortion cost results, and a prediction mode corresponding to the minimum rate distortion cost result is determined as a prediction mode parameter of the current block.

That is, on the encoder side, a plurality of prediction modes can be used to respectively encode the colour component to be predicted for the current block. Herein, a plurality of prediction modes generally include an inter prediction mode, a conventional intra prediction mode and a non-conventional intra prediction mode. The conventional intra prediction mode can include Direct Current (DC) mode, Planar mode and angular mode. Non-conventional intra prediction mode can include Matrix Weighted Intra Prediction (MIP) mode, Cross-component Linear Model Prediction (CCLM) mode, Intra Block Copy (IBC) mode and Palette (PLT) mode, etc. Inter prediction mode can include Geometric partitioning for inter blocks (GEO), Geometric partitioning prediction mode, Triangle Partition Mode (TPM) and so on.

In this way, firstly, after respectively encoding the current block by using a plurality of prediction modes, the rate distortion cost result corresponding to each prediction mode can be obtained. Then a minimum rate distortion cost result is selected from a plurality of obtained rate distortion cost results, and a prediction mode corresponding to the minimum rate distortion cost result is determined as the prediction mode parameter of the current block. In this way, the current block can finally be encoded by using the determined prediction mode, and with such prediction mode, the prediction residual can be made small, and the encoding efficiency can be improved.

At step S302, the geometric information and corresponding attribute information of the point cloud data of the current block are determined.

In some embodiments, the point cloud data includes the number of points in the point cloud region. The point cloud data in the current block meeting the preset condition includes: the point cloud data of the current block is a dense point cloud. Taking a two-dimensional case as an example, as illustrated in FIG. 3B, which illustrates a comparison between sparse convolution and densely convolution: with the densely convolution, the convolution kernel traverses every pixel position of the plane 321; with the sparse convolution, since the data is sparsely distributed in the plane 322, it is not necessary to traverse all positions in the plane, but only need to perform convolution for the positions where the data exists (i.e., the positions of colored boxes), which can greatly reduce the processing amount for the data like point cloud that are very sparsely distributed in space. In some possible implementations, the geometric information of these points and the attribute information corresponding to the geometric information are determined. The geometric information includes the coordinate values of the points, and the attribute information includes at least colour, luma, pixel value and the like.

At step S303, a hidden layer feature is obtained by downsampling the geometric information and the corresponding attribute information by using a sparse convolution network.

In some embodiments, the hidden layer feature is the geometric information and corresponding attribute information after downsampling the geometric information and corresponding attribute information of the current block. Step S303 may be understood as that a plurality of times of downsamplings are performed for the geometric information and the attribute information corresponding to the geometric information to obtain the geometric information and the corresponding attribute information after downsampling. For example, according to the convolution implementation with a step size of 2 and a convolution kernel size of 2, the features of voxels in each 2*2*2 spatial unit are aggregated onto one voxel, the length, width and height sizes of the point cloud are reduced by half after each downsampling, and there are three times of downsamplings to obtain the hidden layer feature.

At step S304, a compressed bitstream is obtained by compressing the hidden layer feature.

In some embodiments, the finally obtained geometric information and attribute information of the hidden layer feature are encoded respectively into binary bitstream to obtain a compressed bitstream.

In some possible implementations, firstly, the frequency of occurrence of the geometric information in the hidden layer feature is determined. For example, the frequency of occurrence of geometric coordinates of the point cloud is determined by using an entropy model. Herein, the entropy model is based on a trainable probability density distribution represented by factorization, or a conditional entropy model based on context information. Then an adjusted hidden layer feature is obtained by performing adjustment through weighting the hidden layer feature according to the frequency. For example, the greater the probability of occurrence, the greater the weight. Finally, the compressed bitstream is obtained by encoding the adjusted hidden layer feature into the binary bitstream. For example, , the coordinate and attribute of the hidden layer features are encoded respectively by means of arithmetic coding to obtain the compressed bitstream.

In the embodiment of the present disclosure, the sparse convolution network is used to determine the point cloud region with less number of point clouds from the point cloud, so that the feature attribute may be extracted for the point cloud region with more number of point clouds, which can not only improve the operation speed, but also have higher coding performance, and thus can be used for complex point cloud in real scenes.

In some embodiments, in order to be better applied in complex point cloud scenes, after acquiring the current block of the video to be compressed, it is also possible to first determine the number of points in the point cloud data of the current block; secondly, a point cloud region in which the number of points is greater than or equal to a preset value is determined in the current block; thirdly, the geometric information and corresponding attribute information of the point cloud data in the point cloud region are determined. Finally, a hidden layer feature used for compressing is obtained by downsampling the geometric information and the corresponding attribute information in this region through a sparse convolution network. In this way, the downsampling is performed on the region including dense point cloud by using the sparse convolution network, such that the compression for the point cloud in complex scenes can be implemented.

In some embodiments, in order to improve the accuracy of the determined geometric information and attribute information, step S302 may be implemented by steps S321 and S322.

At step S321, the geometric information is obtained by determining a coordinate value of any point of the point cloud data in a world coordinate system.

Herein, for any point in the point cloud data, the coordinate value of the point in the world coordinate system is determined and the coordinate value is taken as the geometric information. It is also possible to set the geometry information to all 1 as placeholder. In this way, the calculation amount on geometric information can be saved.

At step S322, the attribute information corresponding to the geometric information is obtained by performing feature extraction on the any point.

Herein, feature extraction is performed for each point to obtain the attribute information including information such as colour, luma and pixel of the point.

In the embodiment of the present disclosure, the coordinate values of the points in the point cloud data in the world coordinate system are determined, the coordinate values are taken as the set information, and feature extraction is performed to obtain the attribute information, such that the accuracy of the determined geometric information and attribute information is improved.

In some embodiments, at step S303, the operation of obtaining the hidden layer feature by downsampling the geometric information and the corresponding attribute information by using the sparse convolution network may be implemented by steps S401 to S403. As illustrated in FIG. 3C, FIG. 3C is a schematic diagram of another process of implementing the method for compressing the point cloud provided by an embodiment of the disclosure, and the following description is made in conjunction with FIG. 3A.

At step S401, a unit voxel is obtained by quantizing the geometric information and the attribute information belonging to a same point, to obtain a set of unit voxels.

Herein, the geometric information and the corresponding attribute information are represented in the form of three-dimensional sparse tensor, and the three-dimensional sparse tensor is quantized. The three-dimensional sparse tensor is quantized into unit voxels, and thus a set of unit voxels is obtained. Herein, the unit voxel can be understood as the smallest unit representing the point cloud data.

At step S402, a number of times of downsamplings is determined according to a step size of downsampling and a size of a convolution kernel of the sparse convolution network.

Herein, as illustrated in 322 in FIG. 3B, the sparse convolution network may be implemented by using a sparse convolution neural network. The larger the step size of the downsampling and the size of convolution kernel, the less number of times of downsamplings. In a specific example, the number of times of downsamplings is the number of times that the step size of downsampling is multiplied by the size of convolution kernel. For example, the voxel space that can be compressed is determined first according to a step size of downsampling and a size of a convolution kernel of the sparse convolution network. Then the number of times of samplings is determined according to the size of that space. In sparse convolution neural network, the step size of downsampling can be set to 2, the convolution kernel of the network is 2, then the voxel space that can be compressed is 2*2*2, and the number of times of downsamplings is determined to be 3.

At step S403, the hidden layer feature is obtained by aggregating unit voxels in the set of unit voxels according to the number of times of downsamplings.

For example, if the number of times of downsamplings is 3, aggregating the unit voxels in each 2*2*2 spatial unit can be implemented.

In some possible implementations, firstly, the region occupied by the point cloud is divided into a plurality of unit aggregation regions according to the number of times of downsamplings. For example, the number of times of downsamplings is 3, and the region occupied by the point cloud is divided into a plurality of 2*2*2 unit aggregation regions. Then the unit voxels in each unit aggregation region are aggregated to obtain a set of target voxels. For example, the unit voxels in each 2*2*2 unit aggregation region are aggregated into a target voxel to obtain a set of target voxels. Finally, the geometric information and attribute information of each target voxel of the set of target voxels are determined to obtain the hidden layer feature. Herein, after aggregating the unit voxels in the unit aggregation region, the geometric information and corresponding attribute information of each target pixel are determined to obtain the hidden layer feature.

In the embodiment of the disclosure, a plurality of unit voxels in the unit aggregation region are aggregated into one target voxel through a plurality of times of downsamplings, and the geometric information and corresponding attribute information of the target voxel are taken as the hidden layer feature. Therefore, the compression for a plurality of voxels is implemented and the coding performance is improved.

The embodiment of the disclosure provides a method for compressing point cloud, and the method is applied to a video decoding device, i.e. a decoder. The function implemented by the method can be implemented by calling the program code by the processor in the video decoding device. Of course, the program code can be stored in the computer storage medium. It can be seen that the video encoding device at least includes the processor and the storage medium.

In some embodiments, FIG. 4 is a schematic diagram of another process of implementing the method for compressing the point cloud according to an embodiment of the disclosure, the method may be implemented by an decoder. As illustrated in FIG. 4, the method includes at least the following steps.

At step S501, a current block of a video to be decompressed is acquired.

At step S502, the geometric information and corresponding attribute information of the point cloud data of the current block are determined.

At step S503, a hidden layer feature is obtained by upsampling the geometric information and the corresponding attribute information by using a transposed convolution network.

Herein, the size of convolution kernel of the transposed convolution network is the same as the size of convolution kernel of the sparse convolution network. In some possible implementations, the transposed convolution network with a step size of 2 and a convolution kernel of 2 may be used to upsample the geometric information and the corresponding attribute information.

At step S504, a decompressed bitstream is obtained by decompressing the hidden layer feature.

In some embodiments, the finally obtained geometric information and attribute information of the hidden layer feature are encoded respectively into binary bitstream to obtain a compressed bitstream.

In some possible implementations, firstly, the frequency of occurrence of the geometric information in the hidden layer feature is determined. For example, the frequency of occurrence of geometric coordinates of the point cloud is determined by using an entropy model. Herein, the entropy model is based on a trainable probability density distribution represented by factorization, or a conditional entropy model based on context information. Then an adjusted hidden layer feature is obtained by performing adjustment through weighting the hidden layer feature according to the frequency. For example, the greater the probability of occurrence, the greater the weight value. Finally, the decompressed bitstream is obtained by decoding the adjusted hidden layer feature into the binary bitstream. For example, the coordinate and attribute of the hidden layer features are decoded respectively by means of arithmetic decoding to obtain the decompressed bitstream.

In the embodiment of the present disclosure, the compressed point cloud data is decompressed by using the transposed convolution network, it can not only improve the operation speed, but also have higher coding performance, and thus can be used for complex point cloud in real scenes.

In some embodiments, in order to be better applied in complex point cloud scenes, after acquiring the current block of the video to be compressed, it is also possible to determine the number of points in the point cloud data of the current block first; secondly, a point cloud region in which the number of points is greater than or equal to a preset value is determined in the current block; thirdly, the geometric information and corresponding attribute information of the point cloud data in the point cloud region are determined. Finally, a hidden layer feature used for compressing is obtained by downsampling the geometric information and the corresponding attribute information in this region through a sparse convolution network. In this way, the downsampling is performed on the region including dense point cloud by using the sparse convolution network, such that the compression for the point cloud in complex scenes can be implemented.

In some embodiments, in order to improve the accuracy of the determined geometric information and attribute information, step S502 may be implemented by steps S521 and S522.

At step S521, the geometric information is obtained by determining a coordinate value of any point of the point cloud data in a world coordinate system.

At step S522, the attribute information corresponding to the geometric information is obtained by performing feature extraction on the any point.

In the embodiment of the present disclosure, the coordinate values of the points in the point cloud data in the world coordinate system are determined, the coordinate values are taken as the set information, and feature extraction is performed to obtain the attribute information, such that the accuracy of the determined geometric information and attribute information is improved.

In some embodiments, at step S503, the operation that a hidden layer feature is obtained by upsampling the geometric information and the corresponding attribute information by using a transposed convolution network may be implemented through the following steps.

The first step is to determine a target voxel to which the geometric information and the attribute information belong.

Herein, since the current block is obtained by compressing, the geometric information and the attribute information are also compressed. The target voxel to which the geometric information and the corresponding attribute information belong is determined first, and the target voxel is obtained by compressing a plurality of unit voxels. Therefore, the target voxel to which the geometric information and the corresponding attribute information belong is determined first.

The second step is to determine a number of times of upsamplings according to a step size of upsampling and a size of a convolution kernel of the transposed convolution network.

Herein, the transposed convolution network can be implemented by the sparse transposed convolution neural network. The larger the step size of downsampling and the size of convolution kernel, the smaller the number of times of upsamplings.

In some possible implementations, firstly, a unit aggregation region occupied by the target voxel is determined. For example, the unit voxels of the region which are aggregated to obtain the target voxel are determined.

Then the target unit voxel is decompressed into a plurality of unit voxels according to the number of times of downsamplings in the unit aggregation region. For example, if the unit aggregation region is 2*2*2, the decompression is performed for three times according to the number of times of upsamplings, and the target voxel is decompressed into a plurality of unit voxels.

Finally, the hidden layer feature is obtained by determining the geometric information and attribute information of each unit voxel. For example, the geometric information and the corresponding attribute information that are represented in the form of three-dimensional sparse tensor are obtained, and the three-dimensional sparse tensor is quantized, the three-dimensional sparse tensor is quantized into unit voxels, and thus a set of unit voxels is obtained.

In some possible implementations, it is determined first a proportion of non-empty unit voxels to total target voxels in a current layer of the current block. Herein, the number of occupied voxels (i.e., non-empty unit voxels) and the number of unoccupied voxels (i.e., empty unit voxels) in the current layer are determined to obtain the proportion of non-empty unit voxels to the total target voxels in the current layer. Further, for each layer of the current block, the number of occupied voxels and the number of empty voxels that are not occupied are determined, thereby obtaining the proportion of non-empty unit voxels to the total target voxels. In some embodiments, firstly, a binary classification neural network is used to determine the probability that the next unit voxel is a non-empty voxel according to the current unit voxel. Herein, the probability that the next unit voxel is a non-empty voxel is predicted first by using the binary neural network according to whether the current unit voxel is a non-empty voxel or not. Then a voxel whose probability is greater than or equal to a preset proportion threshold is determined as a predicted non-empty unit voxel to determine the proportion. For example, the voxel with probability greater than 0.8 is predicted as non-empty unit voxel, so as to determine the proportion of non-empty unit voxels to the total target voxels.

Then it is determined a number of non-empty unit voxels of a next layer of the current layer in the current block according to the proportion;

Herein, the proportion is determined as the proportion occupied by the non-empty unit voxels of the next layer of the current layer, thereby determining the number of non-empty unit voxels of the next layer.

Further, the geometric information reconstruction is performed for the next layer of the current layer at least according to the number of the non-empty unit voxels.

Herein, the number of non-empty unit voxels is determined according to the previous step, the non-empty unit voxels satisfying the number in the next layer are predicted, and geometric information reconstruction is performed on the next layer of the current layer according to the predicted non-empty unit voxels and unpredicted non-empty unit voxels.

Finally, the hidden layer feature is obtained by determining the geometric information and corresponding attribute information of point cloud data of the next layer.

Herein, after the next layer is reconstructed, the geometric information and corresponding attribute information of the cloud data of that layer are determined. For each layer of the current block that has been reconstructed, the geometric information and corresponding attribute information of the respective layer can be determined. The geometric information and corresponding attribute information of a plurality of layers are taken as the hidden layer feature of the current block.

In an embodiment of that present disclosure, the number of non-empty unit voxels in the next layer is predicted through the proportion occupied by the non-empty unit voxels in the current layer, such that the number of non-empty voxels in the next layer is closer to the true value, and the preset proportion threshold is adjusted according to the true value number of non-empty voxels in the point cloud, such that the set for the self-adaptive threshold using the number of voxels can be implemented in classification reconstruction, and thus the coding performance can be improved.

In some embodiments, the standards organizations such as the Moving Picture Experts Group (MPEG), the Joint Photographic Experts Group (JPEG) and the Audio Video Coding Standard (AVS) are developing technical standards related to the point cloud compression. The MPEG Point Cloud Compression (PCC) is a leading and representative technical standard. It includes G-PCC and Video-based Point Cloud Compression (V-PCC). Geometric compression in G-PCC is mainly implemented through the octree model and/or triangular surface model. V-PCC is mainly implemented through three-dimensional to two-dimensional projection and video compression.

According to the compression content, the point cloud compression can be divided into geometric compression and attribute compression. The technical solution of the embodiment of the disclosure belongs to the geometric compression.

Similar to the embodiment of the present disclosure is the new point cloud geometric compression technology by utilizing neural network and deep learning. The technical materials emerged in related arts can be divided into volume model compression technology based on three-dimensional convolution neural network and point cloud compression technology directly using PointNet or other networks on point set.

Because G-PCC can not fully perform feature extract and transform for the point cloud geometry structure, the compression ratio is low. The coding performance of V-PCC is better than G-PCC on dense point cloud. However, due to the projection method, V-PCC can not fully compress the three-dimensional geometric structure features, and the complexity of the encoder is high.

Related learning-based point cloud geometric compression technologies are lack of test results that meet the standard conditions, and lack of sufficient peer review and public technology and data for comparative verification. Its various methods have the following obvious defects: the application scope of the technology that the compression is directly performed on the point set is limited to small point cloud with fixed and small number of points, and can not be directly used for complex point cloud in real scenes. Due to the conversion of the sparse point cloud into a volume model for compression, the point cloud compression technology based on three-dimensional densely convolution does not fully exploit the sparse structure of the point cloud, resulting in computational redundancy and low coding performance.

Based on this, an exemplary application of the embodiment of the present disclosure in a practical application scenario will be described below.

The embodiment of the disclosure provides a multi-scale point cloud geometric compression method, which uses an end-to-end learning self-encoder framework and utilizes a sparse convolution neural network to construct the analysis transformation and synthesis transformation. The point cloud data is represented as coordinate and corresponding attribute in the form of three-dimensional sparse tensor: {C, F}, and the corresponding attribute FX of the input point cloud geometric data X is all 1 as the placeholder. In the encoder, the input X is progressively downsampled to multiple scales through analysis transformation. During this process, the geometric structure feature is automatically extracted and embedded into the attribute F of sparse tensor. The coordinate CY and feature attribute FY of the hidden layer feature Y are respectively encoded into binary bitstream. In the decoder, the hidden layer feature Y is decoded, and then the multi-scale reconstruction result is output through the progressively upsampling in the synthesis transformation.

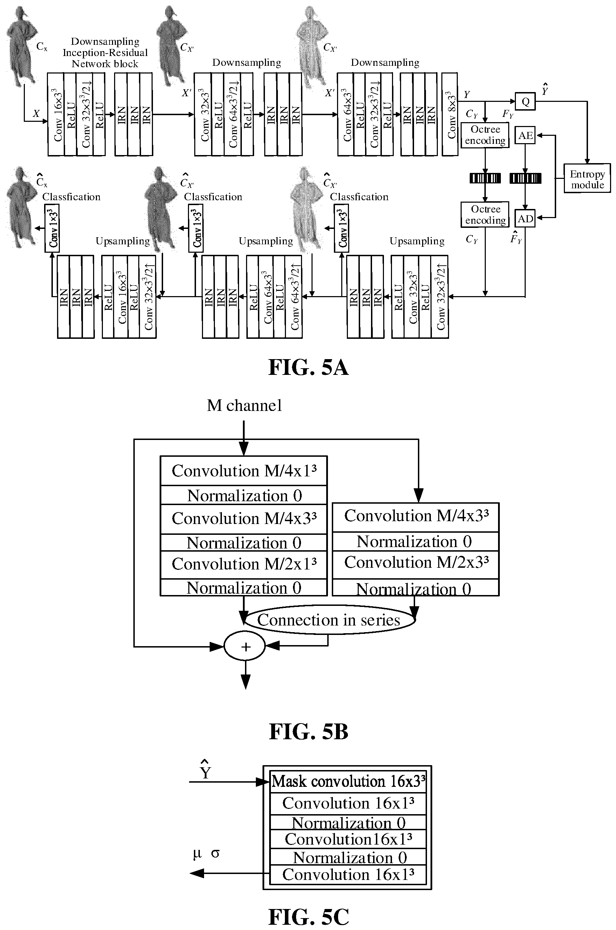

The detailed progress of the method and codec structure are illustrated in FIG. 5A, in which AE represents Arithmetic Encoder and AD represents Arithmetic Decoder. The detail description is as follows.

The transformation of encoding and decoding includes multi-layer sparse convolution neural network: Initial-Residual Network (IRN) is used to improve the feature analysis ability of the network. The IRN structure is as illustrated in FIG. 5B. After each upsampling and downsampling, there is a feature extraction module including three IRN units. The downsampling is implemented through the convolution with a step size of 2 and a convolution kernel size of 2, the features of voxels in each 2x2x2 spatial unit are aggregated onto one voxel, the length, width and height sizes of the point cloud are reduced by half after each downsampling, and there are total three times of downsamplings. In the decoder, the upsampling is implemented through the transposed convolution with a step size of 2 and a convolution kernel of 2, that is, 1 voxel is divided into 2x2x2 voxels, and the length, width and height sizes of the point cloud will be twice of the original one. After each upsampling, the voxels predicted to be occupied are retained from the generated voxels by binary classification, and the voxels predicted to be empty and their attributes are removed to implement the reconstruction of geometric detail. Through hierarchical and progressive reconstruction, the rough point cloud is gradually recovered the detailed structure. The REL as illustrated in FIG. 5B represents a Rectified Linear unit.

The detailed description of multi-scale hierarchical reconstruction is as follows: the voxels can be generated by binary classification, so as to implement the reconstruction. Therefore, on the feature of each scale of the decoder, the probability that each voxel is occupied is predicted through a layer of convolution with an output channel of 1. During the training process, the binary cross entropy loss function ( $L_{\mathrm{BCE}}$ ) is used for measuring the classification distortion

$$D = \frac{1}{N} \sum_{i=1}^{N} L_{BCE}^{i}$$

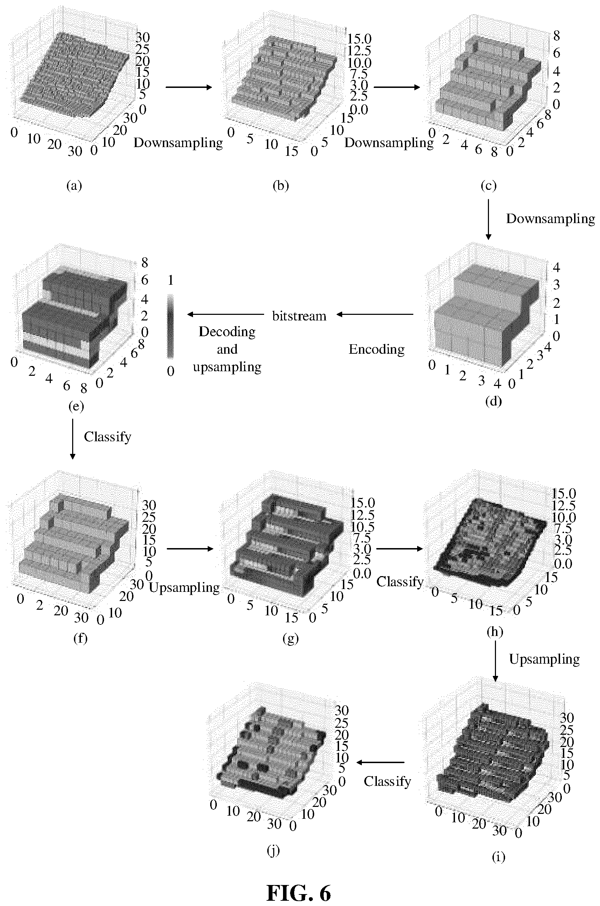

and the training. In the hierarchical reconstruction, multi-scale $L_{\mathrm{BCE}}$ is used correspondingly, i.e., , to achieve multi-scale training, where N denotes the number of different scales, and the multi-scale $L_{\mathrm{BCE}}$ can be referred to as distortion loss, i.e., distortion loss D as described below. During the process of inference, the classification is performed by setting the threshold of probability, and the threshold is not fixed, but is set adaptively according to the number of points. That is, the voxels with higher probability are selected by sorting. When the number of reconstructed voxels is the same as the number of original voxels, the optimal result can often be obtained. A specific reconstruction process can be understood with reference to FIG. 6. As illustrated in FIG. 6, from (a) to (b) indicates one time of downsampling, from (b) to (c) indicates one time of downsampling, and from (c) to (d) indicates one time of down sampling, that is, from (a) to (d) indicates three times of downsamplings of the point cloud during the encoding process. From (e) to (j) indicates the hierarchical reconstruction process of the point cloud, and (e), (g) and (i) indicate the results of three times of upsamplings. The colour denotes the probability that the voxel is occupied, the closer to the light gray illustrated in (a), the greater the probability of being occupied, and the closer to the dark gray of the two colors illustrated in (e), the smaller the probability of being occupied. (f), (h) and (j) are the results according to the probability classification, and there are three possibilities, in which the light gray and dark gray represent correct result and wrong result in predicted voxels, respectively, and black (such as black among the three colors illustrated in (h) and (j)) represents voxels that are not predicted correctly. During the training, in order to avoid the influence of unpredicted voxels on the later reconstruction, both the predicted voxels and unpredicted voxels are reserved for the reconstruction of next level.

The description of how to encode the feature is as follows: the coordinate Cy and attribute $F_Y$ of the hidden layer feature Y obtained through the analysis transformation are encoded separately. The coordinate $C_Y$ is losslessly encoded through the classical octree encoder, such that only a small bit rate is occupied. The attribute FY is quantized to obtain $\hat{F}_Y$, and then the compression is performed through arithmetic encoding. The arithmetic encoding relies on a learned entropy model to estimate the probability $P_{\hat{F}_Y}(\hat{F}_Y)$ of each $\hat{F}_Y$. As illustrated in the following equation (1), the entropy model is obtained through a complete factorization probability density distribution:

$$P_{\hat{F}_Y|\psi}(\hat{F}_Y \mid \psi) = \prod_{i=1}(P_{\hat{F}_Y|\psi^{(i)}}(\psi^{(i)}) * \mathcal{U}(-\frac{1}{2}, \frac{1}{2}))(\hat{F}_Y) \qquad (1)$$

Herein, $\psi^{(i)}$ denotes the distribution of each univariate distribution $P_{\hat{F}_Y|\psi^{(i)}}$. This distribution is convolved with a uniform probability density $\mathcal{U}(-\frac{1}{2}, \frac{1}{2})$ to obtain the probability value.

In addition, the embodiment of the present disclosure also provides a conditional entropy model based on context information, and assuming that the values of feature obey Gaussian distribution $N\left(\mu_i, \sigma_i^{2}\right)$, the entropy model can be obtained by using this distribution. In order to use the context to predict the parameters of the Gaussian distribution, a context model may be designed based on mask convolution, and the model is used for extracting the context information. As illustrated in FIG. 5C, which illustrates the structure of the Context Model via Autoregressive Prior, for the input current voxel $\hat{Y}$, the following voxel of the current voxel is masked through a mask convolution with the convolution kernel $5\times5\times5$, so as to predict the current voxel by using the previous voxel, and obtain the mean and

variance $\mu$, $\sigma$ of the output normal distribution. Experiments show that the context-based conditional entropy model yields an average BD-Rate of -7.28% on the test set compared to the probability density model based on complete factorization.

The parameters of codec are obtained through training, and the training details are described as follows: the data set used is ShapeNet data set, and the data set is sampled to obtain dense point cloud; and the coordinates of the points in the dense point cloud are quantized to the range of [0,127] for training. The loss function used for training is the weighted sum of distortion loss D and rate loss R: $J = R + \lambda D$.

Herein R can be obtained by calculating the information entropy through the probability $P_{\hat{F}_Y}(\hat{F}_Y)$ estimated by

$$R_{\hat{F}_Y} = \frac{1}{K}\sum_j^K -\log_2(P_{\hat{F}_Y}(\hat{F}_Y))$$

the above-mentioned entropy model, that is, obtained through the following formula:
, where K denotes the sum of the numbers to be encoded (i.e., the values obtained through the convolution transformation);

$$D = \frac{1}{N}\sum_{i=1}^{N} L_{BCE}^i$$

the expression of distortion loss is: ; the parameter $\lambda$ is used for controlling the proportion of the rate loss R and the distortion loss D, and the value of this parameter may be set to an arbitrary value such as 0.5, 1, 2, 4 or 6, to obtain models with different bit rates. Training can use Adaptive Moment Estimation (Adam) optimization algorithm. The loss function decays from 0.0008 to 0.00002, and 32000 batches are trained, each batch has 8 point clouds.

The embodiments of the present disclosure are tested on the test point clouds of longdress, redandblack, basketball player and Andrew, Loot, Soldier and Dancer required by MPEG PCC, and various data sets required by the Joint Photography Expert Group, and the point-to-point distance-based peak signal-to-noise ratio (D1 PSNR) is used as the objective quality evaluation indicator, compared with V-PCC, G-PCC (octree) and G-PCC (trisoup), the Bjontegaard Delta Rate (BD-rate) are -36.93%, - 90.46%, -91.06%, respectively.

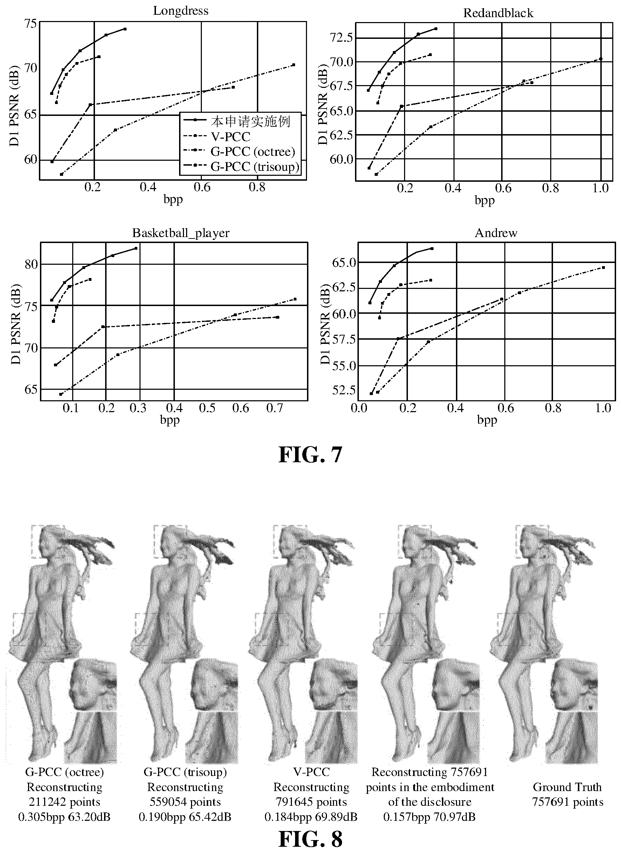

The comparison of the rate graphs for the four data of longdress, redandblack, basketball player and Andrew and other methods is illustrated in FIG. 7. It can be seen from FIG. 7 that the PSNR obtained by the method provided by the embodiment of the present disclosure at any Bit is higher than that obtained by other methods, that is, the compression performance obtained by the embodiment of the present disclosure is better.

The subjective quality comparison of similar bit rates on redandblack data is illustrated in FIG. 8, from which it can be seen that the above data illustrates that the compression performance of the method is greatly improved compared with V-PCC and G-PCC.

In addition, since fully adapting to the sparse and unstructured characteristics of the point cloud, the embodiments of the disclosure have more flexibility compared with other learning-based point cloud geometric compression methods, do not need to limit the number of points or the size of the volume model, and can conveniently process the point cloud of any size. Compared with the method based on the volume model, the time and the storage cost required for encoding and decoding are greatly reduced. The average test on Longdress, Loot, Redandblack and Soldier shows that the memory required for encoding is about 333MB and the time is about 1.58s, and the memory required for decoding is about 1273MB and the time is about 5.4s. Herein, the test equipment used is Intel Core i7-8700KW CPU and Nvidia GeForce GTX 1070 GPU.

In the embodiment of the present disclosure, a method for point cloud geometric encoding and decoding based on sparse tensor and sparse convolution is designed. In the encoding and decoding transformation, multi-scale structure and loss function are used to provide multi-scale reconstruction. The adaptive threshold setting is performed based on the number of points in classification reconstruction.

In some embodiments, structural parameters of the neural network may be modified, such as increasing or decreasing the number of times of upsamplings and downsamplings and/or changing the number of network layers.

Based on the foregoing embodiments, the encoder and decoder for point cloud compression provided by the embodiments of the present disclosure can include all modules and all units included in each module, and can be implemented by a processor in an electronic device. Of course, it can also be implemented by specific logic circuits. In the implementation process, the processor can be a central processing unit, a microprocessor, a digital signal processor or a field programmable gate array, etc.

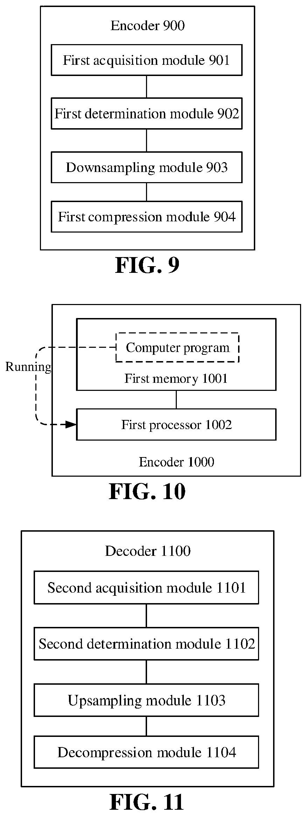

As illustrated in FIG. 9, an embodiment of the present disclosure provides an encoder 900. The encoder 900 includes: a first acquisition module 901, a first determination module 902, a downsampling module 903 and a first compression module 904.

The first acquisition module 901 is configured to acquire a current block of a video to be encoded.

The first determination module 902 is configured to determine geometric information and corresponding attribute information of the point cloud data of the current block.

The downsampling module 903 is configured to obtain a hidden layer feature by downsampling the geometric information and the corresponding attribute information by using a sparse convolution network.

The first compression module 904 is configured to obtain a compressed bitstream by compressing the hidden layer feature.

In some embodiments of the present disclosure, the first determination module 902 is further configured to obtain the geometric information by determining a coordinate value of any point of the point cloud data in a world coordinate system; and obtain the attribute information corresponding to the geometric information by performing feature extraction on the any point.

In some embodiments of the present disclosure, the downsampling module 903 is further configured to obtain a unit voxel by quantizing the geometric information and the attribute information belonging to a same point, to obtain a set of unit voxels; determine a number of times of down-sampling according to a step size of downsampling and a size of a convolution kernel of the sparse convolution network; and obtain the hidden layer feature by aggregating unit voxels in the set of unit voxels according to the number of times of downsamplings.

In some embodiments of the present disclosure, the downsampling module 903 is further configured to: divide a region occupied by the point cloud into a plurality of unit aggregation regions according to the number of times of downsamplings; aggregate unit voxels in each unit aggregation region to obtain a set of target voxels; and obtain the hidden layer feature by determining geometric information and attribute information of each target voxel of the set of target voxels.

In some embodiments of the present disclosure, the first compression module 904 is further configured to: determine a frequency of occurrence of geometric information in the hidden layer feature; obtain an adjusted hidden layer feature by performing adjustment through weighting the hidden layer feature according to the frequency; and obtain the compressed bitstream by encoding the adjusted hidden layer feature into the binary bitstream.

In practical application, as illustrated in FIG. 10, the embodiment of the present disclosure also provides an encoder 1000. The encoder includes: a first memory 1001 and a first processor 1002. The first memory 1001 is configured to store a computer program that is executable by the first processor 1002, and the first processor 1002 is configured to implement the point cloud compression method on the encoder side when executing the program.

As illustrated in FIG. 11, an embodiment of the present disclosure provides a decoder 1100. The decoder 900 includes: a second acquisition module 1101, a second determination module 1102, an upsampling module 1103 and a decompression module 1104.

The second acquisition module 1101 is configured to acquire a current block of a video to be decompressed.

The second determination module 1102 is configured to determine geometric information and corresponding attribute information of the point cloud data of the current block.

The upsampling module 1103 is configured to obtain a hidden layer feature by upsampling the geometric information and the corresponding attribute information by using a transposed convolution network.

The decompression module 1104 is configured to obtain a decompressed bitstream by decompressing the hidden layer feature.

In some embodiments of the present disclosure, the second acquisition module 1101 is further configured to: determine a number of points in the point cloud data of the current block; determine a point cloud region in which the number of points is greater than or equal to a preset value in the current block; and determine geometric information and corresponding attribute information of point cloud data in the point cloud region.

In some embodiments of the present disclosure, the second determination module 1102 is further configured to obtain the geometric information by determining a coordinate value of any point of the point cloud data in a world coordinate system; and obtain the attribute information corresponding to the geometric information by performing feature extraction on the any point.

In some embodiments of the present disclosure, the upsampling module 1103 is further configured to: determine a target voxel to which the geometric information and the attribute information belong; determine a number of times of upsamplings according to a step size of upsampling and a size of a convolution kernel of the transposed convolution network; and obtain the hidden layer feature by decompressing the target unit voxel into a plurality of unit voxels according to the number of times of downsamplings.

In some embodiments of the present disclosure, the upsampling module 1103 is further configured to: determine a unit aggregation region occupied by the target voxel; decompress the target unit voxel into the plurality of unit voxels according to the number of times of downsamplings in the unit aggregation region; and obtain the hidden layer feature by determining geometric information and corresponding attribute information of each unit voxel.

In some embodiments of the present disclosure, the upsampling module 1103 is further configured to: determine a proportion of non-empty unit voxels to total target voxels in a current layer of the current block; determine a number of non-empty unit voxels of a next layer of the current layer in the current block according to the proportion; perform geometric information reconstruction for the next layer of the current layer at least according to the number of the non-empty unit voxels; and obtain the hidden layer feature by determining geometric information and corresponding attribute information of point cloud data of the next layer.

In some embodiments of the present disclosure, the upsampling module 1103 is further configured to: determine a probability that a next unit voxel is a non-empty voxel according to a current unit voxel by using a two-class neural network; and determine the proportion by determining a voxel whose probability is greater than or equal to a preset proportion threshold as a non-empty unit voxel.

In some embodiments of the present disclosure, the decompression module 1104 is further configured to: determine a frequency of occurrence of geometric information in the hidden layer feature; obtain an adjusted hidden layer feature by performing adjustment through weighting the hidden layer feature according to the frequency; and obtain the decompressed bitstream by decompressing the adjusted hidden layer feature into the binary bitstream.

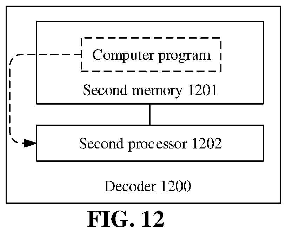

In pratical application, as illustrated in FIG. 12, an embodiment of the present disclosure further provides a decoder 1200. The decoder 900 includes:

a second memory 1201 and a second processor 1202.

The second memory 1201 is configured to store a computer program that is executable by the second processor 1202, and the second processor 1202 is configured to implement the point cloud compression method on the decoder side when executing the program.

Correspondingly, the embodiment of the present disclosure provides a storage medium having stored thereon a computer program which, when executed by the first processor, implements the point cloud compression method of the encoder; or when executed by a second processor, implements the point cloud compression method of the decoder.

The above description of the embodiments of the device is similar to the description of the embodiments of the method described above and has similar beneficial effects as the embodiments of the method . Technical details not disclosed in the embodiments of the device of the present disclosure are understood with reference to the description of the embodiments of the method of the present disclosure.

It is to be noted that, in the embodiment of the present disclosure, if the point cloud compression method is implemented in the form of a software function module and sold or used as an independent product, it can also be stored in a computer-readable storage medium. Based on such understanding, the technical solutions of the embodiment of the present disclosure, in essence or in part contributing to the related arts, can be embodied in the form of software products. The computer software product is stored in a storage medium and includes a number of instructions to enable the electronic device (which may be a mobile phone, tablet computer, notebook computer, desktop computer, robot, drone, etc.) to perform all or part of the methods described in various embodiments of the present disclosure. The aforementioned storage medium includes various medium capable of storing program codes, such as U disk, mobile hard disk, Read Only Memory (ROM), magnetic disk or optical disk. Thus embodiments of the present disclosure are not limited to any particular combination of hardware and software.

It is to be pointed out that the above description of the embodiments of the storage medium and device is similar to the description of the embodiments of the method described above and has similar beneficial effects as the embodiments of the method . Technical details not disclosed in the embodiments of the storage medium and device of the present disclosure are understood with reference to the description of the embodiments of the method of the present disclosure.

It is to be understood that references to "one embodiment" or "an embodiment" throughout the specification mean that specific features, structures, or characteristics related to the embodiments are included in at least one embodiment of the present disclosure. Thus, the terms "in one embodiment" or "in an embodiment" appearing throughout the specification do not necessarily refer to the same embodiment. Further these specific features, structures or characteristics may be incorporated in any suitable manner in one or more embodiments. It is to be understood that, in various embodiments of the present disclosure, the size of the sequence number of the above-described processes does not mean the sequence of execution, and the execution order of each process should be determined by its function and inherent logic, and should not limit the implementation of the embodiments of the present disclosure. The above serial numbers of the embodiments of the present disclosure are for description only and do not represent the advantages and disadvantages of the embodiments.

It should be noted that, the terms used herein "including", "comprising" or any other variation thereof are intended to encompass non-exclusive inclusion, so that a process, a method, an article or a device that includes a set of elements includes not only those elements but also other elements that are not explicitly listed, or also elements inherent to such a process, method, article or device. In the absence of further limitations, an element defined by the phrase "includes an ..." does not exclude the existence of another identical element in the process, method, article or device in which the elements is included.

In several embodiments provided by the present disclosure, it should be understood that the disclosed apparatus and method may be implemented by other manners. The embodiments of a device described above are only illustrative, for example, the division of units is only a logical function division, and can be implemented in other ways, for example, multiple units or components can be combined, or integrated into another system, or some features can be ignored or not implemented. In addition, the coupling, or direct coupling, or communication connection between the various components illustrated or discussed may be indirect coupling or communication connection through some interfaces, devices or units, and may be electrical, mechanical, or in other forms.

The units described above as separate elements may or may not be physically separated, and the components displayed as a unit may or may not be a physical unit, that is, it may be located in one place or may be distributed over multiple network units. Part or all of the units can be selected according to actual requirements to achieve the purpose of the embodiment solution.

In addition, all functional units in all embodiments of the present disclosure can be all integrated in one processing unit, each unit can be separately used as a unit, or two or more units can be integrated in one unit. The integrated unit can be implemented either in the form of hardware or in the form of hardware plus software functional unit.

Those ordinary skilled in the art will appreciate that all or part of the steps for implementing the above method embodiments may be implemented by the hardware associated with the program instructions, the aforementioned program may be stored in a computer readable storage medium, and the program, when executed, performs the steps including the above steps of the method embodiments. The aforementioned storage medium includes various medium capable of storing program codes, such as mobile storage device, ROM, magnetic disk or optical disk.

Alternatively, if the integrated unit of the present disclosure is implemented in the form of a software function module and sold or used as an independent product, it can also be stored in a computer-readable storage medium. Based on such understanding, the technical solutions of the embodiment of the present disclosure, in essence or in part contributing to the related arts, can be embodied in the form of software products. The computer software product is stored in a storage medium and includes a number of instructions to enable the electronic device (which may be a mobile phone, tablet computer, notebook computer, desktop computer, robot, drone, etc.) to perform all or part of the methods described in various embodiments of the present disclosure. The aforementioned storage medium includes various medium capable of storing program codes, such as mobile storage device, ROM, magnetic disk or optical disk.

The features disclosed in several embodiments of the product provided in the disclosure can be arbitrarily combined as long as there is no conflict therebetween to obtain a new embodiment of a product.

The features disclosed in several embodiments of the product provided in the disclosure can be arbitrarily combined as long as there is no conflict therebetween to obtain a new embodiment of a product.

The features disclosed in several embodiments of methods or devices provided in the disclosure can be arbitrarily combined as long as there is no conflict therebetween to obtain a new embodiment of a method or a device.

The above description is only some embodiments of the present disclosure, and is not intended to limit the scope of protection of the embodiments of the present disclosure. Any change and replacement is easily to think within the technical scope of the embodiments of the present by those skilled in the art, and fall with the protection scope of the present disclosure. Therefore, the scope of protection of the embodiments of the present disclosure shall be subject to the scope of protection of the claims.

Industrial Applicability

The embodiment of the disclosure discloses a method for compressing point cloud, an encoder, a decoder and a storage medium. The method includes: acquiring a current block of a video to be encoded; determining geometric information and corresponding attribute information of the point cloud data of the current block; obtaining a hidden layer feature by downsampling the geometric information and the corresponding attribute information by using a sparse convolution network; and obtaining a compressed bitstream by compressing the hidden layer feature. In this way, the sparsely downsampling is performed for the geometric information and attribute information of the point cloud in the current block by using the sparse convolution network, and thus the sparse conversion for the complex point cloud can be implemented, such that the hidden layer feature can be compressed to obtain the compressed bitstream, which can not only improve the operation speed, but also have high coding performance, and can be used for complex point cloud in real scenes.

**Claims**

1. A method for compressing point cloud, comprising:

   acquiring a current block of a video to be compressed;
   determining geometric information and corresponding attribute information of point cloud data of the current block;
   obtaining a hidden layer feature by downsampling the geometric information and the corresponding attribute information by using a sparse convolution network; and
   obtaining a compressed bitstream by compressing the hidden layer feature.

2. The method of claim 1, wherein determining the geometric information and the corresponding attribute information of the point cloud data comprises:

obtaining the geometric information by determining a coordinate value of any point of the point cloud data in a world coordinate system; and

obtaining the attribute information corresponding to the geometric information by performing feature extraction on the any point.

3. The method of claim 1, wherein obtaining the hidden layer feature by downsampling the geometric information and the corresponding attribute information by using the sparse convolution network comprises:

obtaining a unit voxel by quantizing the geometric information and the attribute information belonging to a same point, to obtain a set of unit voxels;

determining a number of times of downsamplings according to a step size of downsampling and a size of a convolution kernel of the sparse convolution network; and

obtaining the hidden layer feature by aggregating unit voxels in the set of unit voxels according to the number of times of downsamplings.

4. The method of claim 3, wherein obtaining the hidden layer feature by aggregating unit voxel matrices in the set of voxel matrices according to the number of times of downsamplings comprises:

dividing a region occupied by the point cloud into a plurality of unit aggregation regions according to the number of times of downsamplings;

obtaining a set of target voxels by aggregating unit voxels in each unit aggregation region; and

obtaining the hidden layer feature by determining geometric information and attribute information of each target voxel of the set of target voxels.

5. The method of claim 3 or 4, wherein obtaining the compressed bitstream by compressing the hidden layer comprises:

determining a frequency of occurrence of geometric information in the hidden layer feature;

obtaining an adjusted hidden layer feature by performing adjustment through weighting the hidden layer feature according to the frequency; and

obtaining the compressed bitstream by encoding the adjusted hidden layer feature into a binary bitstream.

6. A method for compressing point cloud, comprising:

acquiring a current block of a video to be decompressed;

determining geometric information and corresponding attribute information of point cloud data of the current block;

obtaining a hidden layer feature by upsampling the geometric information and the corresponding attribute information by using a transposed convolution network; and

obtaining a decompressed bitstream by decompressing the hidden layer feature.

7. The method of claim 6, wherein after acquiring the current block of the video to be decompressed, the method further comprises:

determining a number of points in the point cloud data of the current block;

determining a point cloud region, in which the number of points is greater than or equal to a preset value, in the current block; and

determining geometric information and corresponding attribute information of point cloud data in the point cloud region.

8. The method of claim 6, wherein determining the geometric information and the corresponding attribute information of the point cloud data comprises:

obtaining the geometric information by determining a coordinate value of any point of the point cloud data in a world coordinate system; and

obtaining the attribute information corresponding to the geometric information by performing feature extraction on the any point.

9. The method of claim 6, wherein obtaining the hidden layer feature by upsampling the geometric information and the corresponding attribute information by using the transposed convolution network comprises:

determining a target voxel to which the geometric information and the attribute information belong;
determining a number of times of upsamplings according to a step size of upsampling and a size of a convolution kernel of the transposed convolution network; and
obtaining the hidden layer feature by decompressing the target unit voxel into a plurality of unit voxels according to the number of times of upsamplings.

10. The method of claim 9, wherein obtaining the hidden layer feature by decompressing the target unit voxel into the plurality of unit voxels according to the number of times of upsampling comprises:

determining a unit aggregation region occupied by the target voxel;
decompressing the target unit voxel into the plurality of unit voxels according to the number of times of upsamplings in the unit aggregation region; and
obtaining the hidden layer feature by determining the geometric information and the corresponding attribute information of each unit voxel.

11. The method of claim 10, wherein obtaining the hidden feature by determining the geometric information and the corresponding attribute information of each unit voxel comprises:

determining a proportion of non-empty unit voxels to total target voxels in a current layer of the current block;
determining a number of non-empty unit voxels of a next layer of the current layer in the current block according to the proportion;
performing geometric information reconstruction for the next layer of the current layer at least according to the number of the non-empty unit voxels; and
obtaining the hidden layer feature by determining the geometric information and the corresponding attribute information of point cloud data of the next layer.

12. The method of claim 11, wherein determining the proportion of non-empty voxels to the total target voxels in each target voxel comprises:

determining a probability that a next unit voxel is a non-empty voxel according to a current unit voxel by using a two-class neural network; and
determining the proportion by determining a voxel, whose probability is greater than or equal to a preset proportion threshold, as a non-empty unit voxel.

13. The method of claim 11 or 12, wherein obtaining the decompressed bitstream by decompressing the hidden layer comprises:

determining a frequency of occurrence of geometric information in the hidden layer feature;
obtaining an adjusted hidden layer feature by performing adjustment through weighting the hidden layer feature according to the frequency; and
obtaining a decompressed bitstream by decompressing the adjusted hidden layer feature into a binary bitstream.

14. A encoder for compressing point cloud, comprising:

a first acquisition module, configured to acquire a current block of a video to be encoded;
a first determination module, configured to determine geometric information and corresponding attribute information of point cloud data of the current block;
a downsampling module, configured to obtain a hidden layer feature by downsampling the geometric information and the corresponding attribute information by using a sparse convolution network; and
a first compression module, configured to obtain a compressed bitstream by compressing the hidden layer feature.

15. The encoder for compressing point cloud of claim 14, wherein the first determination module is further configured to:
obtain the geometric information by determining a coordinate value of any point of the point cloud data in a world coordinate system; and obtain the attribute information corresponding to the geometric information by performing feature extraction on the any point.

**16.** The encoder for compressing point cloud of claim 14, wherein the downsampling module is further configured to: obtain a unit voxel by quantizing the geometric information and the attribute information belonging to a same point, to obtain a set of unit voxels; determine a number of times of down-samplings according to a step size of downsampling and a size of a convolution kernel of the sparse convolution network; and obtain the hidden layer feature by aggregating unit voxels in the set of unit voxels according to the number of times of downsamplings.

**17.** A decoder for compressing point cloud, comprising:

a second acquisition module, configured to acquire a current block of a video to be decompressed;
a second determination module, configured to determine geometric information and corresponding attribute information of point cloud data of the current block;
an upsampling module, configured to obtain a hidden layer feature by upsampling the geometric information and the corresponding attribute information by using a transposed convolution network; and
a decompression module, configured to obtain a decompressed bitstream by decompressing the hidden layer feature.

**18.** An encoder, comprising:

a first memory and a first processor;
wherein the first memory is configured to store a computer program that is executable by the first processor, and the first processor is configured to, when executing the program, implement the method for compressing point cloud of any one of claims 1 to 5.

**19.** A decoder, comprising:

a second memory and a second processor;
wherein the second memory is configured to store a computer program that is executable by the second processor, and the second processor is configured to, when executing the program, implement the method for compressing point cloud of any one of claims 6 to 13.

**20.** A storage medium having stored thereon a computer program which, when executed by a first processor, implements the method for compressing point cloud of any one of claims 1-5; or when executed by a second processor, implements the method for compressing point cloud of any one of claims 6-13.

**FIG. 1**

Binary bitstream

Geometric bitstream

Attribute bitstream

Arithmetic decoding

Arithmetic decoding

Octree synthesis

Inverse quantization

Surface fitting

Region Adaptive Hierarchal Transform

Generating Level of Detail

Geometric reconstruction

Inverse lifting

nverse coordinate transformation

Inverse colour conversion

Geometric information

Attribute information

**FIG. 2**

A current block of a video to be compressed is acquired — S301

The geometric information and corresponding attribute information of the point cloud data of the current block are determined — S302

A hidden layer feature is obtained by downsampling the geometric information and the corresponding attribute information by using a sparse convolution network — S303

A compressed bitstream is obtained by compressing the hidden layer feature — S304

**FIG. 3A**

Densely convolution          Sparse convolution

## FIG. 3B

S301
A current block of a video to be compressed is acquired

S302
The geometric information and corresponding attribute information of the point cloud data of the current block are determined

S401
A unit voxel is obtained by quantizing the geometric information and the attribute information belonging to a same point, to obtain a set of unit voxels

S402
A number of times of downsamplings is determined according to a step size of downsampling and a size of a convolution kernel of the sparse convolution network

S403
The hidden layer feature is obtained by aggregating unit voxels in the set of unit voxels according to the number of times of downsamplings

S304
A compressed bitstream is obtained by compressing the hidden layer feature

## FIG. 3C

S501
A current block of a video to be decompressed is acquired

S502
The geometric information and corresponding attribute information of the point cloud data of the current block are determined

S503
A hidden layer feature is obtained by upsampling the geometric information and the corresponding attribute information by using a transposed convolution network

S504
A decompressed bitstream is obtained by decompressing the hidden layer feature

## FIG. 4

**FIG. 5A**

M channel

| Convolution M/4x1³ | |
| Normalization 0 | |
| Convolution M/4x3³ | Convolution M/4x3³ |
| Normalization 0 | Normalization 0 |
| Convolution M/2x1³ | Convolution M/2x3³ |
| Normalization 0 | Normalization 0 |

Connection in series

+

**FIG. 5B**

$\hat{Y}$

| Mask convolution 16x3³ |
| Convolution 16x1³ |
| Normalization 0 |
| Convolution16x1³ |
| Normalization 0 |
| Convolution 16x1³ |

μ  σ

**FIG. 5C**

FIG. 6

**FIG. 7**

G-PCC (octree)
Reconstructing
211242 points
0.305bpp 63.20dB

G-PCC (trisoup)
Reconstructing
559054 points
0.190bpp 65.42dB

V-PCC
Reconstructing
791645 points
0.184bpp 69.89dB

Reconstructing 757691
points in the embodiment
of the disclosure
0.157bpp 70.97dB

Ground Truth
757691 points

**FIG. 8**

Encoder 900

First acquisition module 901

First determination module 902

Downsampling module 903

First compression module 904

**FIG. 9**

Running

Computer program

First memory 1001

First processor 1002

Encoder 1000

**FIG. 10**

Decoder 1100

Second acquisition module 1101

Second determination module 1102

Upsampling module 1103

Decompression module 1104

**FIG. 11**

FIG. 12

| INTERNATIONAL SEARCH REPORT | International application No. |
|---|---|
| | **PCT/CN2021/095948** |

**A.    CLASSIFICATION OF SUBJECT MATTER**

H04N 19/124(2014.01)i

According to International Patent Classification (IPC) or to both national classification and IPC

**B.    FIELDS SEARCHED**

Minimum documentation searched (classification system followed by classification symbols)

H04N

Documentation searched other than minimum documentation to the extent that such documents are included in the fields searched

Electronic data base consulted during the international search (name of data base and, where practicable, search terms used)

CNABS, CNTXT, CNKI, VEN, EPTXT, USTXT, WOTXT, GOOGLE, IEEE: 点云, 编码, 压缩, 解码, 稀疏, 散乱, 卷积, 隐藏层, 隐藏, 特征, 下采样, 降采样, 卷积核, 卷积窗, 步长, 步幅, point cloud, code, compress, decode, sparse, convolution, convolutional, kernel, stride

**C.    DOCUMENTS CONSIDERED TO BE RELEVANT**

| Category* | Citation of document, with indication, where appropriate, of the relevant passages | Relevant to claim No. |
|---|---|---|
| X | CN 110677652 A (PLEX-VR DIGITAL TECHNOLOGY (SHANGHAI) CO., LTD.) 10 January 2020 (2020-01-10) description, paragraphs [0002]-[0003], paragraphs [0038]-[0057], figures 1-3 | 6-13, 17, 19-20 |
| Y | CN 110677652 A (PLEX-VR DIGITAL TECHNOLOGY (SHANGHAI) CO., LTD.) 10 January 2020 (2020-01-10) description, paragraphs [0002]-[0003], paragraphs [0038]-[0057], figures 1-3 | 1-5, 14-16, 18 |
| Y | CN 111199206 A (SHANGHAI EYE CONTROL TECHNOLOGY CO., LTD.) 26 May 2020 (2020-05-26) claims 1-11 | 1-5, 14-16, 18 |
| A | CN 110674829 A (HARBIN ENGINEERING UNIVERSITY) 10 January 2020 (2020-01-10) description, paragraph [0004] | 1-20 |
| A | CN 110349230 A (PEKING UNIVERSITY SHENZHEN GRADUATE SCHOOL) 18 October 2019 (2019-10-18) entire document | 1-20 |
| A | US 2019156206 A1 (FACEBOOK INC.) 23 May 2019 (2019-05-23) description, paragraphs [0027]-[0151], and figures 1-13 | 1-20 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 July 2021** | **30 July 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

## INTERNATIONAL SEARCH REPORT

| International application No. |
| --- |
| **PCT/CN2021/095948** |

**C.    DOCUMENTS CONSIDERED TO BE RELEVANT**

| Category* | Citation of document, with indication, where appropriate, of the relevant passages | Relevant to claim No. |
| --- | --- | --- |
| A | US 2020019794 A1 (UNIV OXFORD INNOVATION LTD.) 16 January 2020 (2020-01-16) entire document | 1-20 |

Form PCT/ISA/210 (second sheet) (January 2015)

**INTERNATIONAL SEARCH REPORT**
Information on patent family members

International application No.

**PCT/CN2021/095948**

| Patent document cited in search report | | | Publication date (day/month/year) | Patent family member(s) | | | Publication date (day/month/year) |
|---|---|---|---|---|---|---|---|
| CN | 110677652 | A | 10 January 2020 | None | | | |
| CN | 111199206 | A | 26 May 2020 | None | | | |
| CN | 110674829 | A | 10 January 2020 | None | | | |
| CN | 110349230 | A | 18 October 2019 | US | 2021019918 | A1 | 21 January 2021 |
| US | 2019156206 | A1 | 23 May 2019 | CN | 111615706 | A | 01 September 2020 |
| | | | | EP | 3711031 | A4 | 13 January 2021 |
| | | | | EP | 3711031 | A1 | 23 September 2020 |
| | | | | WO | 2019099899 | A1 | 23 May 2019 |
| US | 2020019794 | A1 | 16 January 2020 | GB | 2545602 | A | 21 June 2017 |
| | | | | EP | 3516587 | A1 | 31 July 2019 |
| | | | | GB | 201616095 | D0 | 02 November 2016 |
| | | | | GB | 201705404 | D0 | 17 May 2017 |
| | | | | WO | 2018055377 | A1 | 29 March 2018 |
| | | | | GB | 2545602 | B | 09 May 2018 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010508225

- CN 202010677169